Europäisches Patentamt

(19) European Patent Office

Office européen des brevets

(11) Publication number: **0 221 503**
**B1**

# EUROPEAN PATENT SPECIFICATION

(45) Date of publication of the patent specification:
**05.09.90**

(51) Int. Cl.⁵: **G01T 1/20**, G01T 1/164

(21) Application number: **86114991.2**

(22) Date of filing: **14.05.84**

(60) Publication number of the earlier application in accordance
with Art. 76 EPC: **0130325**

(54) Light pipe for scintillation crystal assembly of a radiation detector and method for producing the same.

(30) Priority: **24.05.83 US 497486**

(43) Date of publication of application:
**13.05.87 Bulletin 87/20**

(45) Publication of the grant of the patent:
**05.09.90 Bulletin 90/36**

(84) Designated Contracting States:
**DE FR NL**

(56) References cited:
**GB-A- 1 159 545**
**US-A- 3 774 032**

**JAPANESE JOURNAL OF APPLIED PHYSICS, vol. 10,
no. 11, November 1971, pages 1597-1600, Tokyo, JP; S.
FUKUI et al.: "Flexible adiabatic light guide of silicon
rubber"**

(73) Proprietor: **Siemens Aktiengesellschaft,
Wittelsbacherplatz 2, D-8000 München 2(DE)**

(72) Inventor: **Haas, Werner J., Dr., Ringstrasse 34,
D-8525 Uttenreuth(DE)**
Inventor: **Stoub, Everett W., Dr., 1401 Holly Bank Circle,
Dunwoody Ga. 30338(US)**

ACTORUM AG

## Description

### BACKGROUND OF THE INVENTION

#### 1. Field of the invention

This invention relates to a light pipe for a scintillation crystal assembly of a radiation detector and a method for producing the same. A preferred field of application of the invention is in a scintillation gamma camera as radiation detector, which comprises a plurality of photomultiplier tubes connected with the light pipe as part of a scintillation crystal assembly.

#### 2. Description of the Prior Art

The radiation detector of the U.S. Patent 3, 784, 819 (Martone et al.) makes use of a light pipe of an acrylic plastic. The crystal side of the light pipe is coated with a reflective material, forming a plurality of masking elements. The masking elements modify the distribution of scintillation light in the light pipe. Thus they provide for a better light distribution, which results in an improved image display. The method of positioning of masking elements on a light pipe does not provide for an optimum distribution of scintillation light. The same can be said regarding the radiation detector of FR-A-2, 446, 491 where the masking elements are also positioned on the surface of the light pipe.

U.S. Patent 3, 072, 973 has depicted a method of making cast plastic laminates for a long time (since 1963) in a technical field (articles of laminated plastic with decorative embodiments) which is completely different from that of light pipes in radiation detectors.

U.S. Patent 3, 774, 032 discloses a light guide wherein dimming or opaque areas are placed on the surface of a light conductor which is directly adjacent to photomultiplier tubes.

The Japanese Journal of Applied Physics, Vol. 10, No. 11, November 1971, pages 1597-1600 illustrates an adiabatic light guide for scintillation counters, said light guide being made of a silicone rubber.

### SUMMARY OF THE INVENTION

#### 1. Objects

It is an object of this invention to provide a light pipe and a method for improved masking with masking elements for enhancing distribution of scintillation light.

#### 2. Summary

According to this invention a light pipe for a scintillation crystal assembly of a radiation detector is provided which comprises a body which has been formed of an adhesive which after curing is elastic and light transparent, wherein the body formed, of the adhesive comprises masking element embedded in the body spaced to the surface in prescribed depths for modifying the distribution of scintillation light.

Also, according to this invention a method has been provided for producing a light pipe for a scintillation crystal assembly of a radiation detector, comprising the steps of:

a) providing a casting-mold having the negative shape of the light pipe;

b) filling the casting-mold to a prescribed depth with an adhesive which after the curing is elastic and light transparent and allowing it to cure;

c) applying an appropriate pattern of mask material, e.g. by silk-screen inking, on the surface of the cured adhesive, for forming masking elements for modifying the distribution of scintillation light; and

d) repeating these steps until the full pattern of masking elements has been applied and the light pipe is formed with its final depth.

According to this invention a radiation detector including a light pipe has been created which light pipe can be very easily fabricated in its final shape by casting. The casting of a light pipe from an adhesive also provides for an easy way of embedding masking elements, which guarantees enhanced distribution of scintillation light.

The foregoing and other objects, features and advantages of the invention will be apparent from the following more particular description of preferred embodiments of the invention, as illustrated in the accompanying drawings.

### BRIEF DESCRIPTION OF THE DRAWINGS

In the drawings:

Fig. 1 shows a top view of a scintillation crystal assembly in a detector head, such as a scintillation gamma camera, comprising a light pipe according to this invention;

Fig. 2 shows the scintillation crystal assembly of Fig. 1 in a cross section; and

Fig. 3 shows in a cross section a casting-mold for the light pipe.

### DETAILED DESCRIPTION OF THE PREFERRED EMBODIMENT

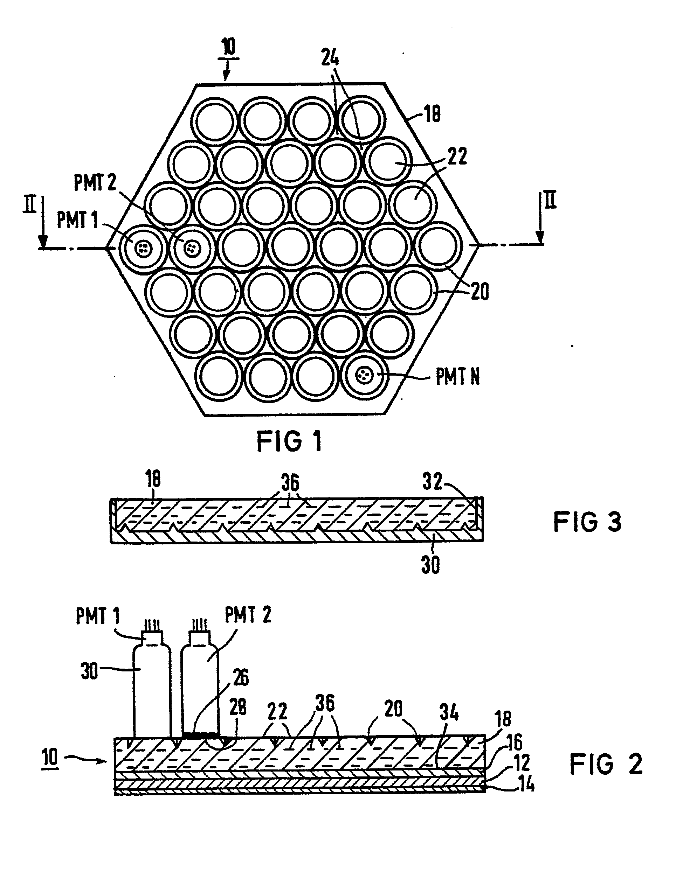

In Figs. 1 and 2 the scintillation crystal assembly 10, which has hexagonal shape, comprises a scintillation crystal 12 (e.g. NaI(Tl)), an aluminum cover 14, a glass disc 16 and a light pipe 18. The body of the light pipe 18 is sculptured by means of circular grooves 20 into (e.g. 37) circular pads 22 and interstices 24. On each pad 22 a photomultiplier tube PMTI to PMTN has to be placed. Thus a detector head (e.g. gamma camera head) will be created, which comprises for example a total of N = 37 photomultiplier tubes. Merely three (of e.g. N = 37) photomultiplier tubes are shown in Figs. 1 and 2 for illustrating purpose.

Each photomultiplier tube PMTI to PMTN has a bottom 26 and is bonded with its bottom 26 to a corresponding pad 22 by means of an elastic light transparent silicone rubber compound. The silicone rubber compound has a transmission of greater than 0.8 through 1 cm at 400nm wavelengths and a moderate refractive index from about 1.4 to 1.6, at 400 nm. Such a silicone rubber adhesive is available for example from General Electric Company, Silicone Products Division, RTV Products Department, Waterford, New york 12188 under the name RTV 615 or RTV 655 (see General Electric's brochure CDS-1870A "RTV Silicone Rubber Product Data RTV 615, RTV 655 and RTV 670, High Strengh Transparent Silicone Rubber Compound"). Other usable silicone rubber adhesives are for example the Sylgard ʀ Silicone Elastomers 182 or 184 available from the Dow Corning Corporation, Midland, Michigan 48640 (see page 22 of Dow Corning's brochure "Materials for High Technology Applications"). In the present case RTV 615 of General Electric is used as adhesive. The silicone rubber bond is indicated with the numeral 28.

Also the light pipe 18 has been formed ot the same elastic light transparent silicone rubber compound, for example RTV 615 of General Electric, as has been used for bonding the bottoms 26 of the photomultiplier tubes PMTI to PMTN to the light pipe 18.

Preferably the light pipe 18 as shaped according to Figs. 1 and 2 has been produced in one piece by casting. This is for example indicated in Fig. 3.

Fig. 3 shows in a cross section a casting-mold 30, which is the sculpture negative of the light pipe 18 of Figs. 1 and 2.

As described in the brochure Product Data CDS-1870A of General Electric ten parts of the A compound and one part of the B compound have previously been mixed and stirred in a container such as to produce a homogeneous mixture free of air bubbles. The mixture is then cast into the interior volume 32 of the casting-mold 30. After the curing the light pipe 18 can be removed from the casting-mould 30 and bonded to the glass disc 16 of the scintillation crystal assembly 10 preferably also by means of the silicone rubber adhesive RTV 615.

After having bonded the photomultiplier tubes PMTI to PMTN to the pads 22, the light pipe 18 and both the silicone rubber bond 28 between photomultiplier tubes and light pipe and the silicone rubber bond 34 between light pipe and glass disc 16 form an optically uniform unit. This unit provides an excellent optical matching with respect to the scintillation flashes travelling from the scintillation crystal 12 via glass disc 16 to the photomultiplier tubes PMTI to PMTN.

According to this invention masking elements, such as dots or rings of reflective or absorptive material, are embedded in the body of the light pipe 18, as indicated in Figs. 2 and 3 by the reference numeral 36. The masking elements modify the distribution of the scintillation light so that an improvement in camera performance is achieved. The masking elements 36 have been applied to the silicone rubber compound mixture, during the casting of the light pipe 18. Thereby the casting-mold has been filled to a prescribed depth with the silicone rubber compound. After the curing of this layer of silicone rubber compound the appropriate pattern of mask material, by silk-screen inking of the surface of the cured silicone rubber compound for example, has been applied. These steps have been repeated until the full pattern of masking elements has been applied and the light pipe is formed with its final depth.

## Claims

1. A light pipe (18) for a scintillation crystal assembly (10) of a radiation detector, comprising a body which has been formed of an adhesive which after curing is elastic and light transparent, characterized in that the body formed of the adhesive comprises masking elements (36) embedded in the body spaced to the surface in prescribed depths for modifying the distribution of scintillation light.

2. A method for producing a light pipe (18) for a scintillation crystal assembly (10) of a radiation detector, comprising the steps of:

   a) providing a casting-mold (30) having the negative shape of the light pipe (18);

   b) filling the casting-mold (30) to a prescribed depth with an adhesive which after the curing is elastic and light transparent and allowing it to cure;

   c) applying an appropriate pattern of mask material, e.g. by silk-screen inking, on the surface of the cured adhesive for forming masking elements (36) for modifying the distribution of scintillation light; and

   d) repeating these steps until the full pattern of masking elements (36) has been applied and the light pipe is formed with its final depth.

## Patentansprüche

1. Lichtröhre (18) für eine Szintillationskristallanordnung eines Strahlungsdetektors mit einem Körper, der aus einem Kleber hergestellt ist, der nach der Aushärtung elastisch und lichttransparent ist, dadurch gekennzeichnet, daß der aus dem Kleber hergestellte Körper Maskenelemente (36) enthält, die in den Körper in einem vorgegebenen Abstand zur Oberfläche eingebettet sind, um die Verteilung des Szintillationslichtes zu modifizieren.

2. Verfahren zur Herstellung einer Lichtröhre (18) für eine Szintillationskristallanordnung (10) eines Strahlungsdetektors mit folgenden Schritten:

   a) Eine Gußform (30) mit der negativen Form der Lichtröhre (18) wird vorgesehen.

   b) Die Gußform (30) wird zu einer vorgegebenen Tiefe mit einem Kleber gefüllt, der nach der Aushärtung elastisch und lichttransparent ist, und die Aushärtung dieses Klebers wird abgewartet.

   c) Auf der Oberfläche des ausgehärteten Klebers wird zur Bildung von Maskenelementen ein geeignetes Muster von Maskenmaterial, z.B. durch Siebdruck, aufgebracht, um die Verteilung des Szintillationslichtes zu modifizieren.

   d) Diese Schritte werden so lange wiederholt, bis das volle Muster an Maskenelementen (36) aufgebracht ist und die Lichtröhre ihre volle Tiefe erreicht hat.

## Revendications

1. Un guide de lumière (18) pour une structure de cristal scintillateur (10) d'un détecteur de rayonnement, comprenant un corps qui a été formé au moyen d'un adhésif qui, après durcissement, est élastique et transparent, caractérisé en ce que le corps formé au moyen de l'adhésif contient des éléments de masquage (36) qui sont noyés dans le corps, à des profondeurs déterminées à partir de la surface, dans le but de modifier la distribution de la lumière de scintillation.

2. Un procédé de fabrication d'un guide de lumière (18) pour une structure de cristal scintillateur (10) d'un détecteur de rayonnement, comprenant les opérations suivantes :

a) on fournit un moule (30) ayant une forme complémentaire de celle du guide de lumière (18);

b) on remplit le moule (30) jusqu'à une profondeur déterminée avec un adhésif qui, après durcissement, est élastique et transparent, et on laisse durcir cet adhésif;

c) on applique un motif approprié d'une matière de masque, par exemple par sérigraphie, sur la surface de l'adhésif durci, pour former des éléments de masquage (36) ayant pour but de modifier la distribution de la lumière de scintillation; et

d) on répète ces opérations jusqu'à l'application du motif complet d'éléments de masquage (36), et on forme le guide de lumière en lui donnant sa profondeur finale.

EP 0 221 503 B1

FIG 1

FIG 3

FIG 2